# EUROPÄISCHE PATENTSCHRIFT

(11) **EP 2 062 002 B1**
(45) Veröffentlichungstag und Bekanntmachung des Hinweises auf die Patenterteilung: **06.01.2010**
(21) Anmeldenummer: 08749131.2
(22) Anmeldetag: 25.04.2008
(51) Int. Cl.: F28F 3/02, F28D 1/03, B21C 37/15, B21C 37/22, B23P 15/26, B21D 53/08

(54) **WÄRMETAUSCHERKERN, HERSTELLUNGSVERFAHREN, WALZENSTRASSE**
HEAT EXCHANGER CORE, PRODUCTION METHOD, ROLLER LINE
NOYAU D' ÉCHANGEUR THERMIQUE, PROCÉDÉ DE FABRICATION, LIGNE DE PROFILAGE À GALETS

(30) Priorität: 18.05.2007 DE 102007023361
(43) Veröffentlichungstag der Anmeldung: 27.05.2009
(73) Patentinhaber: Modine Manufacturing Company, Racine, Wisconsin 53403-2552 (US)
(72) Erfinder: OPFERKUCH, Frank, 72669 Unterensingen (DE); NIES, Jens, 71088 Holzgerlingen (DE)
(74) Vertreter: Wolter, Klaus-Dietrich
(86) Internationale Anmeldenummer: PCT/EP2008/003352
(87) Internationale Veröffentlichungsnummer: WO 2008/141715

(56) Entgegenhaltungen:
- WO-A-2005/088219
- DE-A1- 10 218 274
- DE-A1- 19 728 247
- GB-A- 2 426 727
- JP-A- 2004 003 863
- JP-A- 2005 241 168
- US-A- 3 021 804
- US-A- 4 587 701
- US-A- 5 456 006
- US-A1- 2004 069 472
- US-B1- 6 378 603

## Beschreibung

Die Erfindung betrifft einen Wärmetauscherkern aus Flachrohren, mit zwei Schmal - und zwei Breitseiten und mit zwischen den Breitseiten benachbarter Flachrohre verbleibenden im Wesentlichen unverbauten Zwischenräumen sowie mit weiteren Merkmalen gemäß dem Oberbegriff des Anspruchs 1. Ferner betrifft die Erfindung ein Herstellungsverfahren für Flachrohre eines Wärmetauscherkernes, das auf einer Walzenstraße ausgeführt wird gemäß dem Oberbegriff des Anspruchs 11. Schließlich betrifft die Erfindung auch die Walzenstraße selbst gemäß dem Oberbegriff des Anspruchs 12. solch ein Wärmetauscherkern ist aus der DE-A-10218274 bekannt und solch ein Verfahren und Walzenstraße sind aus der US-A-5456006 bekannt.

Wärmetauscher mit Wärmetauscherkemen aus Flachrohren gehören seit langer Zeit zum Stand der Technik. Vielfach bestehen die Umformungen der Breitseiten aus örtlichen Eindellungen oder aus Vorsprüngen oder dergleichen. Vielfach sind solche Kerne auch von einem Gehäuse umgeben, wobei das durch die Zwischenräume strömende Medium in das Gehäuse über eine oder mehrere Öffnungen einströmt, die Zwischenräume passiert und über andere Öffnungen im Gehäuse wieder austritt. Darüber hinaus gehören Wärmetauscher mit Wärmetauscherkemen zum Stand der Technik, deren Flachrohre serpentinenartig umgeformt sind. Dabei weisen die relativ langen Flachrohre Biegungen um 180° auf, wobei zwischen aufeinander folgenden Biegungen Rippen oder Vorsprünge angeordnet sein können. Bei solchen Wärmetauschern werden die Flachrohre - im Unterschied zu dem oben angegebenen Wärmetauscherkern - nicht parallel durchströmt, womit gemeint ist, dass wenigstens einige benachbarte Flachrohre, meistens alle Flachrohe, in einer gemeinsamen Richtung durchströmt werden. Vielmehr strömt das Mittel sozusagen hin und her, wobei die einzelnen Flachrohr-Abschnitte zwischen den Biegungen passiert werden und um so vom Einlass zum Auslass zu gelangen. Ein Beispiel unter vielen anderen Wärmetauschern dieser Bauart kann der US 4 587 701 entnommen werden. Solche Wärmetauscherkeme können wegen der erwähnten zahlreichen Biegungen nicht so kompakt ausgebildet werden wie man es gerne hätte. Die Kompaktheit ist deshalb begrenzt, weil die Biegeradien eine bestimmte untere Grenze nicht unterschreiten dürfen. Zu kleine Biegeradien könnten zum Verschluss der Flachrohre bzw. zur Funktionsunfähigkeit des Wärmetauschers führen. Diesen Wärmetauschern muss auch oftmals ein zu hoher Druckverlust wegen der zahlreichen Umlenkungen des in den Rohren strömenden Mediums nachgesagt werden.

Ferner gibt es Wärmetauscher mit Wärmetauscherkernen der so genannten Rohrbündel-Bauart, die ähnlich der erstgenannten Bauart sind. Bei diesen Wärmetauschern befindet sich ein Bündel, meist aus runden Rohren, manchmal auch aus flachen Rohren, in einem Gehäuse. Die Wand der einzelnen Rohre kann beispielsweise spiralartig oder anderweitig verformt sein. Das eine Mittel strömt durch die Rohre und das andere Mittel strömt - wie oben auch - am Gehäuse ein und aus, wobei es auf dem Weg vom Einlass zum Auslass durch die Abstände bzw. Zwischenräume zwischen den Rohren des Bündels strömt. Ferner weisen diese Rohre nur Wandverformungen auf. Diese sind meist so ausgebildet, dass die Rohre sich nach wie vor geradlinig erstrecken.

Natürlich gibt es im Unterschied dazu auch noch Wärmetauscher, deren Rohre nicht geradlinig sind, sondern die beispielsweise in der Art von Spiralen verformt sind. Zwischen den einzelnen Gängen der schneckenartigen Spirale/n können sich Rippen oder dergleichen befinden. Solche Konstruktionsprinzipien sind jedoch beispielsweise für im Kraftfahrzeug vorhandene Radiatoren oder dergleichen, bei denen Kühlluft durch die Zwischenräume strömt, nicht zu verwenden, jedenfalls sind sie dort bisher nicht üblich gewesen.

Ein mit den Merkmalen des Oberbegriffs des Anspruchs 1 versehener Wärmetauscherkern ist aus der WO 2005/088219A1 oder aus der US 6 378 603 B1 bekannt. Die Flachrohre der dortigen Wärmetauscherkerne sind stranggepresste Rohre mit entsprechend großer Wanddicke, was angesichts ihrer Verwendung als Wärmetauscher beispielsweise in einer CO2 - Klimaanlage sicherlich eine gute Wahl darstellt, denn in solchen Klimaanlagen herrscht ein beachtlicher Innendruck.

Der Wärmetauscher aus US 2004/0069472 besitzt keine Kanäle in den Flachrohren. Der Wärmetauscher aus US 5 456 006 besitzt keine Wellungen der Flachrohre und weist Rippen zwischen den Flachrohren auf. Der Wärmetauscher aus JP 2005241168A besitzt ebenfalls Rippen zwischen den Flachrohren. Die geraden, nicht gewellten Flachrohre sind dort aus Wandabschnitten zweier Blechplatten gebildet worden. In jedem Flachrohr befindet sich ein Inneneinsatz.

Die Aufgabe der Erfindung besteht darin, einen Wärmetauscherkern der eingangs beschriebenen Art, insbesondere für den Einsatz als Kühlflüssigkeitskühler oder Ladeluftkühler weiter zu bilden, der kompakt und leistungsfähig sowie hinsichtlich der Herstellungskosten konkurrenzfähig ist.

Die erfindungsgemäße Lösung ergibt sich bezüglich des Wärmetauscherkemes mit den Merkmalen des Anspruchs 1. Das erfindungsgemäße Herstellungsverfahren für die Flachrohre des Wärmetauscherkemes ist Gegenstand des Anspruchs 11. Das Herstellungsverfahren wird auf einer Walzenstraße ausgeführt, die die Merkmale des Anspruchs 12 aufweist.

Bezüglich des Wärmetauscherkernes ist vorgesehen, dass die Flachrohre aus wenigstens einem endlosen, umgeformten Blechstreifen herstellbar sind, wobei die inneren Kanäle aus einem anderen wellenförmig umgeformten Blechstreifen oder aus einem wellenförmig umgeformten Streifenabschnitt des einen Blechstreifens gebildet sind, und wobei die Wellenberge und Wellentäler mit den Breitseiten der Flachrohre an ihren Innenseiten verbunden sind.

Die Baukosten werden deutlich reduziert, weil die vorschlagsgemäßen Flachrohre des Wärmetauscherkerns wesentlich kleinere Wanddicken bzw. Blechstreifendicken aufweisen können als beim vorne beschriebenen Stand der Technik mit stranggepressten Rohren. Deshalb können z. B. auch mehr Flachrohre im gleichen Bauraum angeordnet werden. Das Gewicht des Wärmetauscherkerns kann reduziert werden, usw.

Die inneren Kanäle können diskrete Kanäle sein, die also keine Querverbindung zwischen benachbarten Kanälen aufweisen. Die spezielle Ausbildung mancher Ausführungsformen der Flachrohre lässt es jedoch zu, dass die Kanäle auch Durchbrüche besitzen können, was für verschiedene Anwendungen als vorteilhaft angesehen wird. Der Wärmetauscherkern besitzt trotz der deutlich reduzierten Wanddicke der Flachrohre eine ausreichende Innendruckstabilität, weil die Wellenberge und die Wellentäler innen mit den Breitseiten der Flachrohre metallisch verbunden sind, insbesondere verlötet sind. Die Zwischenräume des Wärmetauscherkerns sind im Wesentlichen unverbaut, das heißt, es befinden sich dort keine Rippen oder ähnliche Elemente. Es ist in der bevorzugten Ausführung auch nicht vorgesehen, dass sich die Breitseiten benachbarter Flachrohre berühren. Gemäß einem wesentlichen Merkmal verlaufen beide einen Zwischenraum begrenzenden Breitseiten über die gesamte Länge und

### Tiefe des Kerns parallel.

Die beiden Schmalseiten der Flachrohre sind vorzugsweise verstärkt ausgebildet, das heißt, sie besitzen durch Überlappungen der Blechstreifenränder oder durch Faltungen in den Blechstreifen eine wesentlich größere Wanddicke als die Breitseiten der Flachrohre. Da beide Schmalseiten derartig verstärkt ausgebildet sind, ist auch der Zusammenbau des Wärmetauscherkerns vereinfacht worden. Die vorne bereits erwähnte mögliche sehr kleine Rohrwanddicke und die noch kleinere mögliche Kanalwanddicke der Flachrohre sind auch aufgrund des Herstellungsverfahrens erreichbar. Die Rohrwanddicke der Flachrohre bzw. die Dicke des wenigstens einen Blechstreifens ist vorzugsweise im Bereich von 0,03 mm - 0,15 mm, in Ausnahmen bis 0,20 mm angesiedelt. Die Dicke des Innenteils bzw. die Kanalwanddicke liegt vorzugsweise im Bereich von 0,03 mm - 0,10 mm. Dadurch wird ein Beitrag zur Steigerung der Wärmetauscheffizienz geleistet.

Beispielsweise in der Ausführung als Kühlflüssigkeitskühler besitzen die Flachrohre einen kleinen Durchmesser von weniger oder nur wenig mehr als 1,00 mm. Die Zwischenräume entsprechen etwa diesem Maß oder sie sind nur geringfügig breiter, sodass wesentlich mehr Flachrohre im gleichen Bauraum angeordnet werden können.

Da die Wellungen bevorzugt flache Wellen sind, die dementsprechend relativ große Wellenlängen und vergleichsweise relativ kleine Wellenhöhen aufweisen, bewegt sich der Druckverlust in sehr moderatem Rahmen. Er kann durch die Wellengeometrie beeinflusst werden.

Es ist darüber hinaus bevorzugt vorgesehen, dass die Breitseiten, abgesehen von den Wellungen, ansonsten eben sind, das heißt, sie weisen zumindest in der bevorzugten Ausführung keine örtlichen Eindellungen oder Vorsprünge auf.

Das Herstellungsverfahren für Flachrohre, die Bestandteil eines Wärmetauschernetzes sind und die aus wenigstens einem Streifen endlosen Bandmaterials mit wenigstens einem Wandteil und einem mit Wellen ausgebildeten Innenteil, auf einer mit Walzenpaaren ausgerüsteten Walzenstraße hergestellt werden, wobei der Streifen in Längsrichtung durch die Walzen läuft und umgeformt wird, wobei das mit Wellen ausgebildete Innenteil zwischen das umgeformte Wandteil gebracht wird, wonach das Schließen des Flachrohrs und schließlich das Zuschneiden einzelner Flachrohre durchgeführt wird, sieht gemäß der Erfindung vor, dass nach dem Schließen und vor dem Zuschneiden eine in Längsrichtung der Flachrohre laufende Wellung der Breitseiten der Flachrohre vorgenommen wird. Eine alternativ vorgesehene in Querrichtung laufende Wellung der Flachrohre wird bereits vorher, nämlich im Zuge der Umformung der Streifen vor deren Vereinigung zum Flachrohr hergestellt.

Das Verfahren sichert eine wirtschaftliche Herstellung der Flachrohre in großen Stückzahlen. Bezüglich der Walzenstraße zur Durchführung des Verfahrens zur Herstellung von Flachrohren aus wenigstens einem endlosen Streifen Bandmaterials, wobei die Walzenstraße wenigstens einen Abschnitt zum Umformen des Streifens, einen Abschnitt zum Vereinigen des Streifens zum Rohr und eine Abtrennstation für Rohre aufweist, ist gemäß der Erfindung vorgesehen, dass zwischen dem Vereinigungsabschnitt und der Abtrennstation eine Umformstation abgeordnet ist, mit der eine Längswellung der Breitseiten der Flachrohre herstellbar ist. Zur Ausbildung von Querwellen befinden sich die dafür vorgesehen Walzen im Umformabschnitt der Streifen.

Die Flachrohre werden vorzugsweise gelotet. Es versteht sich deshalb, dass entsprechende Lotbeschichtungen und weitere Erfordernisse vorhanden sein müssen. Der Werkstoff ist mit besonderem Vorzug Aluminium bzw. eine Aluminiumlegierung. Es ist allerdings leicht erkennbar, dass andere lötfähige Metalle ebenfalls geeignet sind. Das Löten kann entweder so erfolgen, dass einzelne bereits gelötete Flachrohre von der Walzenstraße laufen, was bevorzugt ist, oder das Löten der Flachrohre kann beispielsweise gleichzeitig mit dem Löten des gesamten Wärmetauscherkerns oder Wärmetauschers erfolgen.

Weitere Merkmale befinden sich in den abhängigen Ansprüchen, auf die hiermit verwiesen wird, weshalb sie als an dieser Stelle genannt betrachtet werden sollen.

Die Erfindung wird nun in Ausführungsbeispielen anhand der beigefügten Zeichnungen / Skizzen beschrieben. Die Beschreibung kann weitere erfindungswesentliche Merkmale und deren Vorteile enthalten.
Die Fig. 1 zeigt eine perspektivische Ansicht eines Wärmetauscherkerns.
Die Fig. 2a, 2b zeigen zwei Ausschnitt aus Wärmetauscherkernen.
Die Fig. 3 und 4 eine Frontansicht bzw. eine Seitenansicht eines Wärmetauscherkerns.
Die Fig. 5 zeigt eine Draufsicht als Ausschnitt.
Die Fig. 6 und 7 zeigen die Ausbildung von Längswellungen der Flachrohre
Die Fig. 8 und 9 zeigen den Wärmetauscher mit Längswellungen der Flachrohre gemäß Fig. 6 bzw. 7. Die Fig. 10 und 11 zeigen Momente der Herstellung des besonders bevorzugten Flachrohrs.
Die Fig. 12a, 12b zeigen Untersuchungsergebnisse.
Die Fig. 13 zeigt eine Walzenstraße im Prinzip.

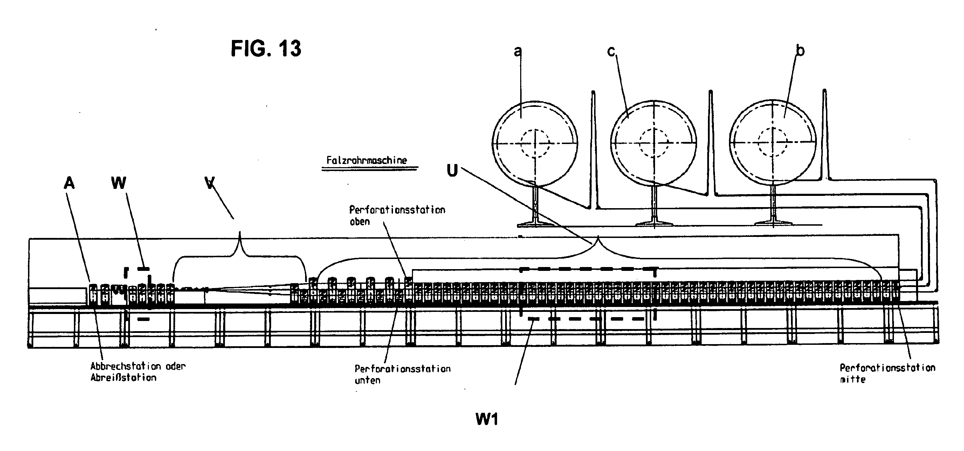

Die Flachrohre des Wärmetauscherkemes werden auf einer Walzenstraße oder Fertigungsstraße hergestellt, die in der Fig. 13 prinzipiell dargestellt ist. In diesem Ausführungsbeispiel werden die Flachrohre aus drei "endlosen" Blechbändern bzw. Blechstreifen hergestellt. Es gibt darüber hinaus andere nicht gezeigte Ausführungsbeispiele, in denen die Flachrohre aus einem einzigen oder aus zwei Blechbändern hergestellt werden. An dieser Stelle verweist die Anmelderin auf ihre älteren Anmeldungen mit den Aktenzeichen DE 10 2006 006 670.7, DE 10 2006 041 270.2, DE 10 2006 002 789.2, und DE 10 2006 035 210.6, wo Flachrohre aus einem einzigen bzw. aus zwei Blechbändern beschrieben und gezeigt sind, die sich in gleicher Weise eignen, im Wärmetauscherkern verwendet zu werden. Dort sind auch Flachrohre gezeigt, deren Schmalseiten 10 zahlreiche Faltungen zu deren Verstärkung aufweisen. Dort sind ferner Ausführungen vorhanden, in denen die Kanäle 30 der Flachrohre 1 durch Faltungen in den Breitseiten 20 bzw. in einem Streifenabschnitt hergestellt worden sind. Wegen möglicherweise hier fehlender Angaben, soll der gesamte Inhalt der genannten älteren Anmeldungen als an dieser Stelle vorhanden angesehen werden.

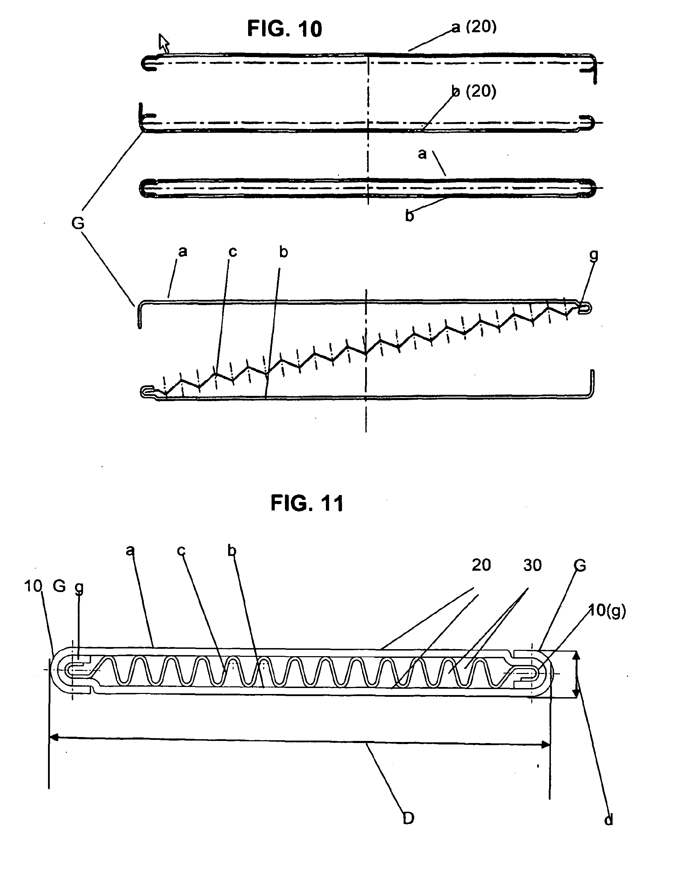

Zurück zum hier gezeigten Ausführungsbeispiel, wo aus dem einen Blechband das eine Wandteil **a** des Flachrohres entsteht, aus dem zweiten Blechband das andere Wandteil b des Flachrohres entsteht, und aus dem dritten Blechband entsteht das gewellte Innenteil c. Die Fig. 11 zeigt ein fertiges Flachrohr im Querschnitt und die Fig. 10 zeigt eine Situation im Zuge der Herstellung der Flachrohre, und zwar diejenige Situation, die etwa im Vereinigungsabschnitt **V** der Walzenstraße vorliegt, in der das Innenteil **c** zwischen die beiden Wandteile **a**, **b** gebracht wird. Die die Kanäle **30** bildenden Wellungen des Innenteils c können bogenförmige Wellungen sein (wie gezeigt), aber auch Wellungen, die in Längsrichtung laufende Abkantungen - demzufolge etwa senkrecht stehende Wellenflanken - aufweisen, sind geeignet und sollen unter dem Begriff "Wellungen" verstanden werden.

Aus den Fig. 10 und 11 ist weiter zu sehen, dass die beiden Wandteile a und b identisch ausgebildet sind. Sie weisen an dem einen Rand einen größeren Bogen G auf und am anderen Rand besitzen sie einen kleineren Bogen **g**. In der in Fig. 10 gezeigten Situation sind die kleineren Bögen **g** bereits fertig ausgebildet und die größeren Bögen G sind bereits vorgeformt. Das Innenteil c wird zunächst schräg zwischen die beiden Wandteile **a**, **b** gebracht, die Wandteile **a**, **b** werden aufeinander zu bewegt und das Flachrohr wird geschlossen, indem die beiden größeren Bögen **G** um die kleineren Bögen **g** gelegt werden, womit die Schmalseiten 10 des Flachrohrs ausgebildet sind. Dadurch entsteht in den Schmalseiten 10 eine doppelte Wanddicke, die die erwähnte Verstärkung der Schmalseiten 10 darstellt. Wie die Fig. 11 zeigt, können die Schmalseiten 10 darüber hinaus dadurch verstärkt werden, dass die beiden Längsränder des Innenteils c in den Schmalseiten 10 anliegen. Die beiden Längsränder des Innenteils c können dazu, wie zu sehen ist, ebenfalls mit einem kleinen Bogen verformt sein. Die Wanddicke der beiden Wandteile a, b kann im Bereich von 0,03 mm - 0,12 mm oder bis 0,15 mm liegen. Die Wanddicke des Innenteils c liegt mit Vorzug im Bereich von 0,03 mm - 0,09 mm.

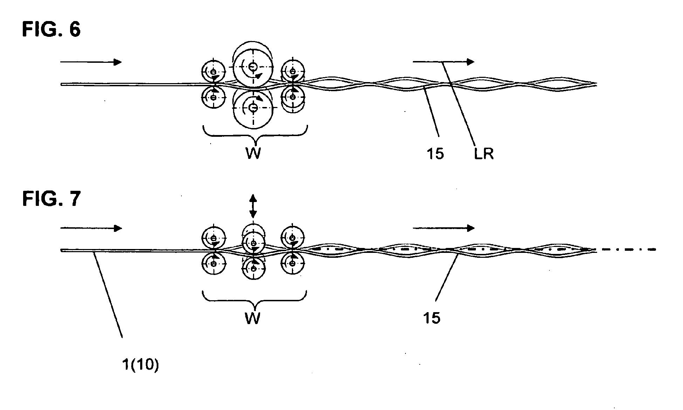

Aus der Fig. 13 ist weiter zu sehen, dass zwischen der bereits erwähnten Vereinigungsstation V und der am Ende der Walzenstraße angeordneten Abtrennstation A für einzelne Flachrohre eine Umformstation W positioniert ist, mit der in Längsrichtung LR des Flachrohres 1 laufende Wellungen 15 der Breitseiten 20 ausgebildet werden. Eine mögliche Ausbildung dieser Umformstation W ist in der Fig. 6 prinzipiell dargestellt. Sie besteht aus drei Walzenpaaren. Das in Laufrichtung oder in Längsrichtung des Flachrohres erste Walzenpaar ist starr, das soll heißen, es besteht aus zwei zentrisch gelagerten sich drehenden Walzen, zwischen denen das endlose Flachrohr läuft und dieses auf dem vorgegebenen Höhenniveau hält. Das unmittelbar folgende Walzenpaar ist nach der Art von Taumelscheiben mit außermittigen Rotationsachsen ausgebildet. Die Drehung dieses Walzenpaares führt zu oszillierender Bewegung des Spaltes zwischen den zwei Walzen, in dem das Flachrohr läuft, wodurch die Wellungen ausgebildet werden. Das dritte Walzenpaar macht die oszillierenden Bewegungen mit. In dem als Alternative dazu gezeigten Ausführungsbeispiel gemäß der Fig. 7 sind drei Walzenpaare mit zentrischen Rotationsachsen zur Herstellung der Wellungen vorhanden. Das erste Walzenpaar ist auch hier starr ausgebildet. Das mittlere und das letzte Walzenpaar sind vertikal bewegbar, das heißt sie führen ebenfalls oszillierende Bewegungen aus, wodurch die Wellungen 15 herstellbar sind. Man sieht dort eine Ansicht auf die eine Schmalseite 10 des Flachrohres. An der linken Seite kommt das noch gerade, endlose Flachrohr **1** an und verlässt die Umformstation rechts mit den ausgebildeten Wellungen 15. Die gestrichelte Linie (Fig. 7) zeigt die Mittelebene des Flachrohrs 1, um die herum die Wellungen 15 fortschreitend pendeln. Wie die Figuren andeuten können, werden die Wellungen 15 im gezeigten Ausführungsbeispiel mit wesentlich größeren Wellenlängen als Amplituden (Wellenhöhen) ausgebildet, weshalb die Wellen 15 ziemlich flach sind. Die Wellen 15 laufen dort in Längsrichtung LR des Flachrohres. Sie können allerdings auch in ihrer Laufrichtung einen geringen Winkel zur Längsrichtung LR besitzen, was durch die Wortwahl "etwa in Längsrichtung LR" zum Ausdruck gebracht sein soll. Unter der "Laufrichtung der Wellen" soll eine senkrecht auf den Wellenflanken stehende Richtung verstanden werden, sozusagen die Fließrichtung bei Flüssigkeitswellen.

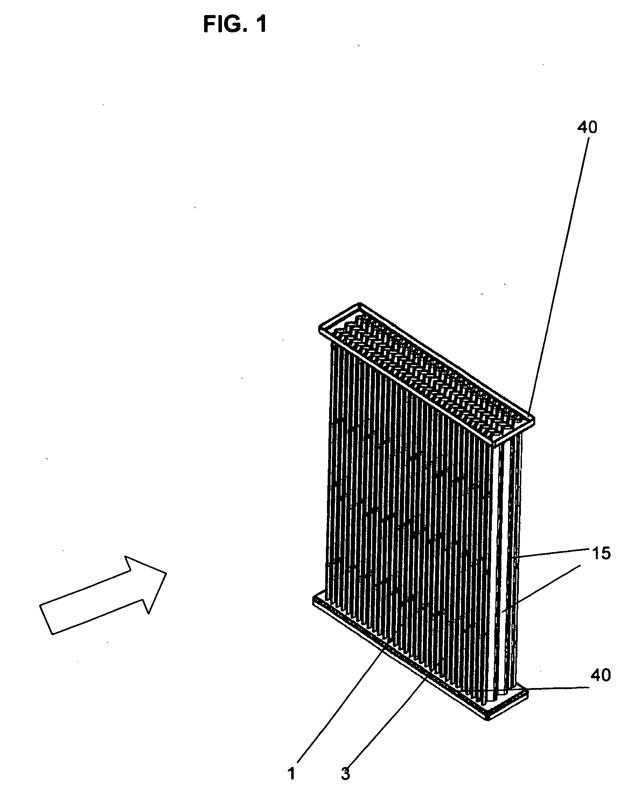

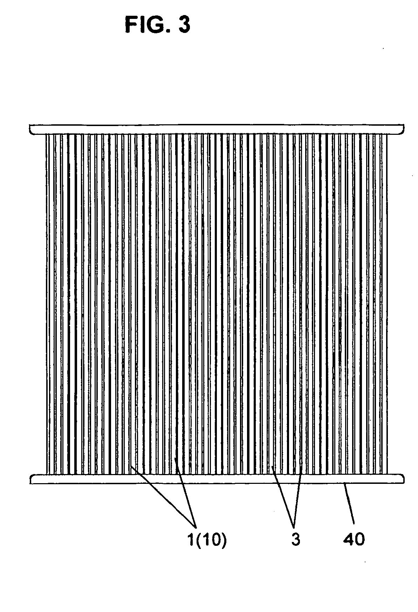

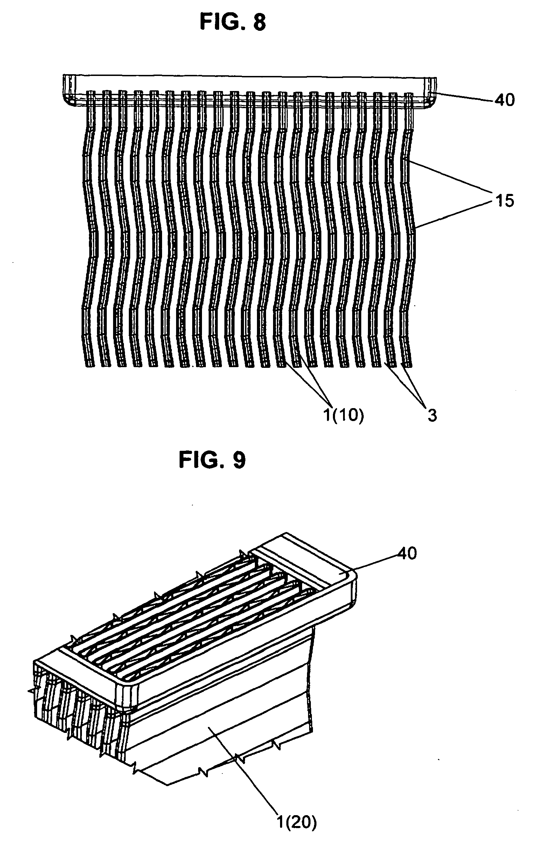

Die Fig. 8 und 9 zeigen einen Wärmetauscherkern in Ausschnitten, bei dem die Wellungen 15 der Flachrohre 1 in Längsrichtung derselben laufen. Diese Flachrohre 1 wurden gemäß dem in den Fig.6 oder 7 gezeigten Prinzip hergestellt. Diese Ausführung ist thermodynamisch gesehen scheinbar nicht so günstig, wie diejenige gemäß den Fig. 1 - 5, weil die Zwischenräume 3 für die Kühlluft zusätzliche Hindernisse erfordern könnten. Die Zwischenräume 3 sind hier, in Strömungsrichtung der Kühlluft bzw. in Tiefenrichtung des Wärmetauscherkerns gesehen, nicht geschlängelt sondern etwa gerade ausgebildet.

Die nicht detailliert in den Figuren gezeigte Herstellung von in Querrichtung der Flachrohre 1 laufenden Wellungen 15 sieht im Unterschied zu den in Längsrichtung laufenden Wellungen 15 vorzugsweise vor, dass solche Querwellungen 15 nicht zwischen der Vereinigungsstation V und der Abtrennstation A vorgenommen werden, sondern bereits in den Umformstationen U, in denen die einzelnen Blechstreifens **a**, **b**, **c** umgeformt werden. Dort sind Walzen **W1** angeordnet, mit deren Hilfe die Querwellung 15 in den drei Streifen hergestellt wird. Nach dem Vereinigen solcher umgeformten und gewellten Blechstreifen **a**, **b**, **c** zum Flachrohr **1** liegen dann die in Querrichtung der Flachrohre **1** laufenden Wellungen 15 vor.

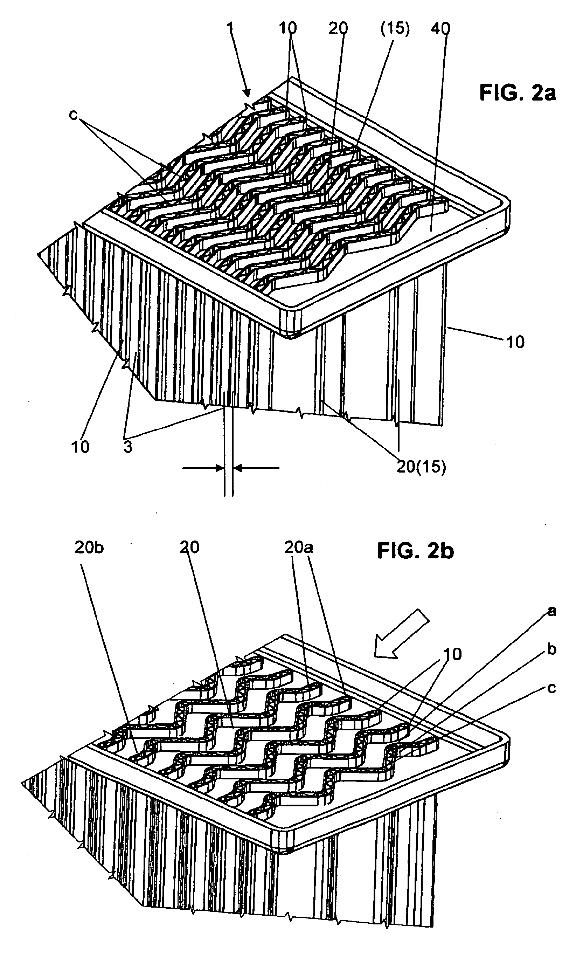

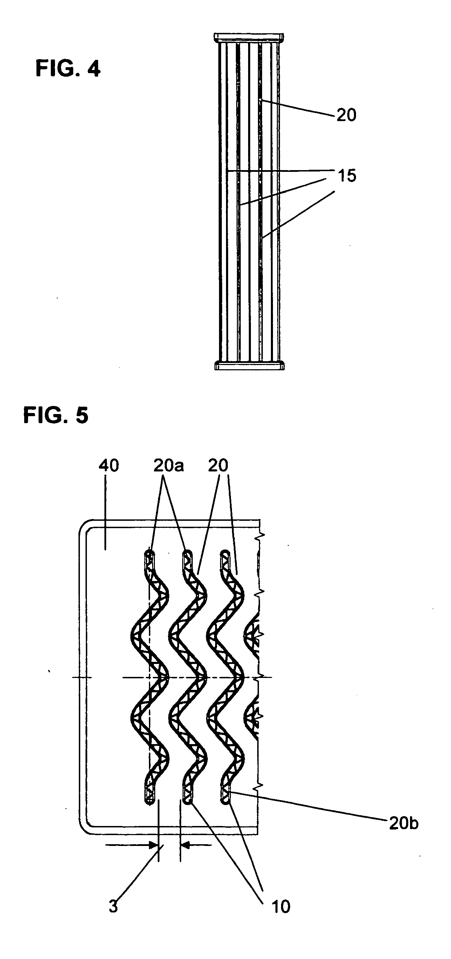

In den Fig. 1 - 5 wird ein bevorzugtes Ausführungsbeispiel eines Wärmetauscherkerns für einen Kühlflüssigkeitskühler gezeigt, der zum Beispiel in einem Kraftfahrzeug zum Einsatz kommen soll. Dessen Flachrohre **1** weisen in Querrichtung derselben bzw. in Tiefenrichtung des Wärmetauscherkerns laufende Wellungen 15 ihrer Breitseiten 20 auf. Diese Wellungen 15 führen dazu, dass die Zwischenräume 3 in Kühlluftströmungsrichtung bzw. in Tiefenrichtung geschlängelt ausgebildet sind, was der Intensität des Wärmeaustausches dienlich ist. (Fig.1, Pfeil) Die Enden der Flachrohre 1 befinden sich in Öffnungen von Rohrböden 40 bzw. in nicht gezeigten Sammelkästen des Wärmetauschers. Natürlich könnten die allerletzten Enden der Flachrohre **1**, die also mit den Sammelkästen verbunden sind, auch ohne Querwellungen 15, d. h. eben, ausgebildet sein. Im Ausführungsbeispiel sind die Flachrohre 1 dagegen durchgehend, einschließlich der allerletzten Enden, gewellt, wie beispielsweise die Fig. 2 und 5 zeigen. Die Flachrohre 1 besitzen eine kleine Abmessung d (Fig. 11) von etwa 1,20 mm. Das entsprechende Maß der Zwischenräume 3 liegt bei etwa 2,0 mm. Die große Abmessung D der Flachrohre 1 bzw. das Tiefenmaß des Wärmetauschers kann bei etwa 100 mm liegen. Bezüglich der Abmessungen der Flachrohre ist allerdings eine beachtliche Variabilität vorhanden, da die Walzenstraße auf verschiedene Blechbandbreiten umgerüstet werden kann. Zumindest die im Kraftfahrzeugbereich vorkommenden Abmessungen von Wärmetauscherrohren sind realisierbar.

Es ist strömungstechnisch von Vorteil, dass die Ausbildung der in Querrichtung laufenden Wellen 15 nicht über die gesamte Länge der Breitseiten 20 (Tiefe des Kerns) geht. Das heißt also, an der Kühlluftanströmseite und/oder an der Kühlluftabströmseite sollte ein Stück, ein Anfangs -und / oder ein Endbereich 20a, 20b der Breitseiten 20 der Flachrohre, nicht gewellt ausgebildet sein. Da die Kühlluftanströmrichtung gewöhnlich senkrecht zur Kühlluftanströmseite steht, steht sie gewöhnlich auch senkrecht auf den Schmalseiten 10 der angeströmten Flachrohre 1. Dadurch wird der Druckverlust in der Kühlluft positiv beeinflusst. Das wird in der Fig. 2b und noch deutlicher in der Fig. 5 gezeigt. Dort wurde sowohl der Anfangsbereich 20a als auch der Endbereich 20b der Breitseiten 20 nicht gewellt ausgebildet. Im Ausführungsbeispiel gemäß der Fig. 2a zieht sich, im Unterschied zu den Fig. 2b und 5, die Wellung 15 durch die gesamten Breitseiten 20.

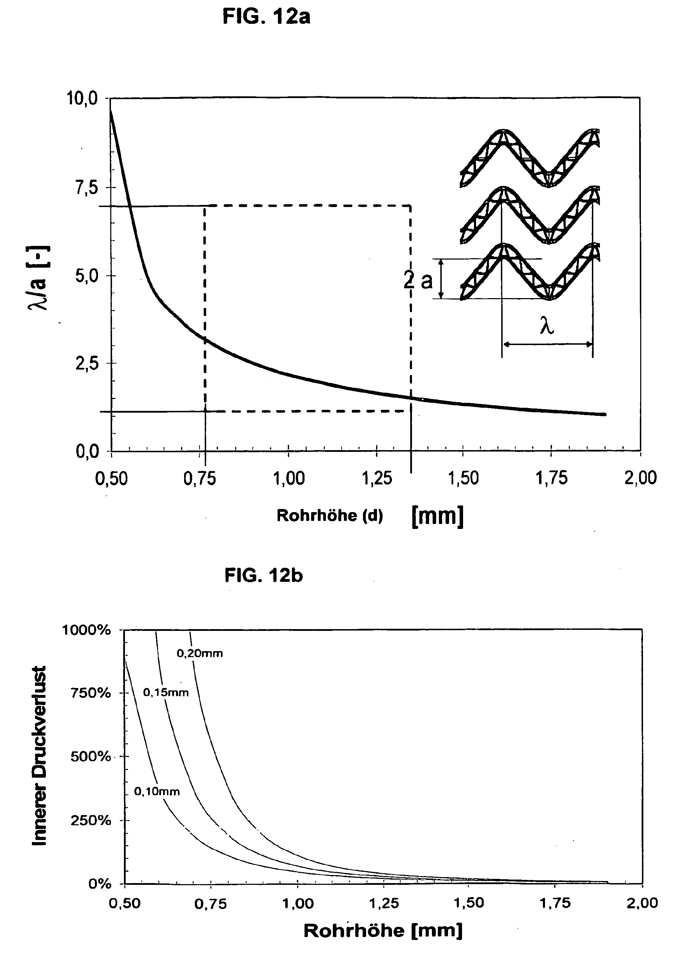

Schließlich ist aus der Fig. 12a ein Bereich mit gestrichelter Linienführung zu erkennen, in dem die Erfindung besonders vorteilhaft umsetzbar ist. Es wurde im Ergebnis von Untersuchungen für den Einsatzfall des Wärmetauscherkernes als Kühlflüssigkeitskühler festgestellt, dass Flachrohre **1** mit einer kleinen Querschnittsabmessung d (Rohrhöhe) zwischen etwa 0,7 und 1,4 mm und mit einer Wellengeometrie (Wellenlänge/ Wellenhöhe (λ/a)) zwischen etwa 1,5 - 4 besonders gute Ergebnisse bezüglich der Wärmetauscheffizienz ergeben, weil dann die Wärme tauschende Oberfläche eine entsprechende Größe aufweist. Die Breite der Zwischenräume 3 (Fig. 5) ist deutlich kleiner als bei üblichen Wärmetauscherkernen. Sie liegt etwa im Bereich der kleinen Abmessung d der Flachrohre 1 und sollte nicht wesentlich größer als das Dreifache dieser Abmessung d sein. Bei d < 0,75 mm wird der innere Druckverlust unter diesen Bedingungen zu hoch, was aus dem Diagramm gemäß Fig. 12b ersichtlich ist. Es sind dort drei Kurven eingezeichnet, die sich auf die Rohrwanddicken 0,10 mm, 0,15 mm und 0,20 mm beziehen. Wie man sehen kann, lassen kleinere Rohrwanddicken auch kleinere Rohrhöhen d und damit schließlich auch mehr Rohre in einem Bauraum gleicher Größe zu. Bei Einsatz der vorne genannten noch kleineren Rohrwanddicken, die bis 0,03 mm gehen können, stellen sich noch wesentlich günstigere Verhältnisse bezüglich der Lösung bzw. der Optimierung des Zielkonflikts ein, der bei Wärmetauschern in der Regel darin besteht, einen möglichst geringen inneren Druckverlust bei gleichzeitig hoher Wärmetauscheffizienz oder hoher Wärmetauschrate zu erreichen.

## Patentansprüche

1. Wärmetauscherkern, beispielsweise für Kühlflüssigkeitskühler oder für Ladeluftkühler, aus Flachrohren (1), mit zwei Schmal - und zwei Breitseiten (10, 20) und mit inneren Kanälen (30) sowie mit zwischen den Breitseiten (20) benachbarter Flachrohre (1) verbleibenden im Wesentlichen unverbauten Zwischenräumen (3), wobei wenigstens einige der aufeinander folgenden Flachrohre (1) parallel von einem Mittel durchströmbar sind, wobei das andere Mittel etwa quer dazu durch die Zwischenräume (3) strömt und wobei die beiden Breitseiten (20) der Flachrohre (1) Umformungen in Form von Wellungen (15) aufweisen und wobei die Breitseiten (20) etwa parallel zueinander angeordnet sind, **dadurch gekennzeichnet, dass** die Flachrohre (1) aus wenigstens einem endlosen, umgeformten Blechstreifen (a) hergestellt sind, wobei die inneren Kanäle (30) entweder aus einem anderen wellenförmig umgeformten Blechstreifen (c) oder aus einem wellenförmig umgeformten Streifenabschnitt des wenigstens einen Blechstreifens (a) gebildet sind, dessen Wellenberge bzw. Wellentäler im Inneren der Flachrohre (1) an deren Breitseiten (20) metallisch verbunden sind, wobei die Wellungen (15) der Breitseiten (20) der Flachrohre (1) entweder in bzw. etwa in Längsrichtung (LR) der Flachrohre (1) oder in bzw. etwa in Querrichtung der Flachrohre (1) laufen.

2. Wärmetauscherkern nach Anspruch 1, **dadurch gekennzeichnet, dass** die beiden Schmalseiten (10) der Flachrohre (1) verstärkt sind, indem sie wenigstens die doppelte Dicke des Blechstreifens bzw. die doppelte Wanddicke einer Breitseite (20) aufweisen.

3. Wärmetauscherkern nach einem der vorstehenden Ansprüche, **dadurch gekennzeichnet, dass** die Breitseiten (20) keine örtlichen Eindellungen oder Vorsprünge aufweisen.

4. Wärmetauscherkern nach einem der vorstehenden Ansprüche, **dadurch gekennzeichnet, dass** die Breitseiten (20) einen Anfangs- und/oder Endbereich (20a) aufweisen, der ohne Querwellungen (15) ausgebildet ist, wodurch die Anströmrichtung des durch die im Wesentlichen unverbauten Zwischenräume (3) strömenden Mittels (Kühlluft) etwa senkrecht auf den Schmalseiten (10) der Flachrohre (1) steht.

5. Wärmetauscherkern nach einem der vorstehenden Ansprüche, **dadurch gekennzeichnet, dass** die Wanddicke der Flachrohre bzw. die Dicke des wenigstens einen Blechstreifens (c) im Bereich von 0,03 mm - 0,15 mm angesiedelt ist.

6. Wärmetauscherkern nach einem der vorstehenden Ansprüche, **dadurch gekennzeichnet, dass** die Flachrohre (1) aus drei endlosen, umgeformten Blechstreifen (a, b, c) herstellbar ist, wobei zwei Blechstreifen (a, b) die Wand des Flachrohres bilden und der dritte Blechstreifen (c) ein gewelltes Innenteil des Flachrohres darstellt, welches die Kanäle (30) im Flachrohr erzeugt.

7. Wärmetauscherkern nach Anspruch 6, **dadurch gekennzeichnet, dass** die beiden die Wand des Flachrohres darstellenden Blechstreifen (a, b) mit einem größeren Bogen (G) an dem einen Längsrand und mit einem kleineren Bogen (g) an dem anderen Längsrand ausgebildet sind, wobei der größere Bogen (G) des einen Blechstreifens den kleineren Bogen (g) des anderen Blechstreifens in sich aufnimmt, um die Schmalseiten (10) des Flachrohres zu bilden.

8. Wärmetauscherkern nach den Ansprüchen 6 und 7, **dadurch gekennzeichnet, dass** die Längsränder des Innenteils (c) umgeformt sind und innen in den Schmalseiten (10) anliegen, um diese weiter zu verstärken.

9. Wärmetauscherkern nach einem der vorstehenden Ansprüche, **dadurch gekennzeichnet, dass** in der Anwendung als Kühlflüssigkeitskühler die kleine Abmessung (d) der Flachrohre zwischen 0,75 - 1,4 mm beträgt, wobei die Wellengeometrie durch ein Verhältnis Wellenlänge/Amplitude (λ/a) im Bereich von 1,5 - 7,5, günstiger von 2,0 - 5,0 **gekennzeichnet** ist.

10. Wärmetauscherkern nach einem der vorstehenden Ansprüche, **dadurch gekennzeichnet, dass** die Abmessung der Zwischenräume (3) etwa bis zum Dreifachen der kleinen Abmessung (d) der Flachrohre oder etwas mehr beträgt.

11. Herstellungsverfahren für Flachrohre (1), die zur Bildung eines Wärmetauscherkerns dienen und die aus Streifen endlosen Bandmaterials (Bb) mit wenigstens einem Wandteil (a) und einem mit Wellen ausgebildeten Innenteil (c), auf einer mit Walzenpaaren ausgerüsteten Walzenstraße hergestellt werden, wobei der Streifen in Längsrichtung (LR) durch die Walzen läuft und umgeformt wird, wobei das mit Wellen ausgebildete Innenteil (c) zwischen das umgeformte Wandteil (a, b) gebracht wird, wonach das Schließen des Flachrohrs und schließlich das Zuschneiden einzelner Flachrohre durch-geführt wird, **dadurch gekennzeichnet, dass** entweder nach dem Schließen und vor dem Zuschneiden eine in bzw. etwa in Längsrichtung (LR) der Flachrohre (1) laufende Wellung (15) der Breitseiten (20) der Flachrohre (1) vorgenommen wird, oder wobei im Zuge der Umformung der Streifen (a, b, c) in bzw. etwa in Querrichtung des Flachrohres laufende Querwellungen ausgebildet werden, wobei danach die Vereinigung zum gewellten Flachrohr (1), bzw. das Schließen und das Zuschneiden erfolgt.

12. Walzenstraße zur Herstellung von Flachrohren (1) aus endlosen Streifen Bandmaterials wobei die Walzenstraße wenigstens einen Abschnitt (U) zum Umformen des Streifens, einen Abschnitt (V) zum Vereinigen des Streifens zum Rohr (1) und eine Abtrennstation (A) für Rohre (1) aufweist **dadurch gekennzeichnet, dass** die Walzenstraße zur Durchführung des Verfahrens gemäß dem vorstehenden Verfahrensanspruch ausgebildet ist und wobei entweder zwischen dem Vereinigungsabschnitt (V) und der Abtrennstation (A) eine Umformstation (W) angeordnet ist, mit der in den Breitseiten (20) der Flachrohre (1) Längswellungen (15) herstellbar sind, oder dass im Abschnitt (U) Walzen (W1) angeordnet sind, die Querwellungen (15) in den endlosen Streifen erzeugen.

13. Walzenstraße nach Anspruch 12, **dadurch gekennzeichnet, dass** die Umformstation (W) wenigstens ein Walzenpaar enthält, das nach dem Prinzip von Taumelwellen arbeitet.

14. Walzenstraße nach Anspruch 12 oder 13, **dadurch gekennzeichnet, dass** das Taumelwellen-Walzenpaar mit einem anderen Walzenpaar zusammenwirkt.

15. Walzenstraße nach Anspruch 12, **dadurch gekennzeichnet, dass** die Umformstation (W) drei Walzenpaare umfasst, von denen zwei Walzenpaare beweglich sind, um die Wellung ausbilden zu können.

## Claims

1. Heat exchanger core, for example for coolant coolers or for charge air coolers, composed of flat pipes (1), having two narrow sides (10) and two broad sides (20), having essentially unobstructed inner ducts (30) and having intermediate spaces (3) which remain between the broad sides (20) of adjacent flat pipes (1), wherein a medium can flow in parallel through at least some of the successive flat pipes (1), wherein the other medium flows approximately transversely thereto through the intermediate spaces (3), and wherein the two broad sides (20) of the flat pipes (1) have deformations in the form of corrugations (15), wherein the broad sides (20) are arranged approximately parallel to one another, **characterized in that** the flat pipes (1) are manufactured from at least one endless, shaped sheet metal strip (a), wherein the inner ducts (30) are formed either from another sheet metal strip (c) which is shaped in the form of a corrugation or from a strip section, shaped in the form of a corrugation, of the at least one sheet metal strip (a) whose corrugation peaks and corrugation troughs are connected metallically to one another in the interior of the flat pipes (1) on their broad sides (20), wherein the corrugations (15) of the broad sides (20) of the flat pipes (1) extend either in or approximately in the longitudinal direction (LR) of the flat pipes (1) or in or approximately in the transverse direction of the flat pipes (1).

2. Heat exchanger core according to Claim 1, **characterized in that** the two narrow sides (10) of the flat pipes (1) are reinforced by virtue of the fact that they are at least twice the thickness of the sheet metal strip or twice the wall thickness of a broad side (20).

3. Heat exchanger core according to one of the preceding claims, **characterized in that** the broad sides (20) do not have any local indents or projections.

4. Heat exchanger core according to one of the preceding claims, **characterized in that** the broad sides (20) have a starting and/or end region (20a) which is constructed without transverse corrugations (15), as a result of which the inflow direction of the medium (cooling air) flowing through the essentially unobstructed intermediate spaces (3) is approximately perpendicular to the narrow sides (10) of the flat pipes (1).

5. Heat exchanger core according to one of the preceding claims, **characterized in that** the wall thickness of the flat pipes or the thickness of the at least one sheet metal strip (c) is in the range from 0.03 mm - 0.15 mm.

6. Heat exchanger core according to one of the preceding claims, **characterized in that** the flat pipes (1) can be manufactured from three endless, shaped sheet metal strips (a, b, c), wherein two sheet metal strips (a, b) form the wall of the flat pipe and the third sheet metal strip (c) constitutes a corrugated inner part of the flat pipe which produces the ducts (30) in the flat pipe.

7. Heat exchanger core according to Claim 6,
**characterized in that** the two sheet metal strips (a, b) which constitute the wall of the flat pipe are embodied with a relatively large arc (G) on one of the longitudinal edges and with a relatively small arc (g) on the other longitudinal edge, wherein the relatively small arc (g) of one of the sheet metal strips fits into the relatively large arc (G) of the other sheet metal strip in order to form the narrow sides (10) of the flat pipe.

8. Heat exchanger core according to Claims 6 and 7, **characterized in that** the longitudinal edges of the inner part (c) are shaped and rest against the inside of the narrow sides (10) in order to reinforce them further.

9. Heat exchanger core according to one of the preceding claims, **characterized in that** in the application as a coolant cooler the small dimension (d) of the flat pipes is between 0.75 - 1.4 mm, wherein the corrugation geometry is **characterized by** a ratio of corrugation length/amplitude (λ/a) in the range from 1.5 - 7.5, and preferably from 2.0 - 5.0.

10. Heat exchanger core according to one of the preceding claims, **characterized in that** the dimension of the intermediate spaces (3) is approximately up to three times the small dimension (d) of the flat pipes or somewhat more.

11. Manufacturing method for flat pipes (1) which serve to form a heat exchanger core and which are manufactured from strips of endless ribbon material (Bb) with at least one wall part (a) and an inner part (c) which is embodied with corrugations, on a roller mill which is equipped with pairs of rollers, wherein the strip runs in the longitudinal direction (LR) through the rollers and is shaped, wherein the inner part (c) which is embodied with corrugations is positioned between the shaped wall part (a, b), after which the flat pipe is closed and finally individual flat pipes are separated to length, **characterized in that** after the closing and before the cutting to length, a corrugation (15), extending in or approximately in the longitudinal direction (LR) of the flat pipes (1), of the broad sides (20) of the flat pipes (1) is formed, or wherein, in the course of the shaping of the strips (a, b, c), transverse corrugations extending in or approximately in the transverse direction of the flat pipe are formed, wherein after this the joining to form the corrugated flat pipe (1), or the closing and the cutting to length take place.

12. Roller mill for manufacturing flat pipes (1) from endless strips of ribbon material, wherein the roller mill has at least one section (U) for shaping the strip, one section (V) for joining the strip to form the pipe (1) and a separating station (A) for pipes (1), **characterized in that** the roller mill for carrying out the method is designed according to the preceding method claim and wherein either a shaping station (W), with which longitudinal corrugations (15) can be manufactured in the broad sides (20) of the flat pipes (1), is arranged between the joining section (V) and the separating station (A), or rollers (W1) which produce transverse corrugations (15) in the endless strips are arranged in the section (U).

13. Roller mill according to Claim 12,
**characterized in that** the shaping station (W) contains at least one pair of rollers which operates according to the principle of wobble shafts.

14. Roller mill according to Claim 12 or 13,
**characterized in that** the wobble-shaft pair of rollers interacts with another pair of rollers.

15. Roller mill according to Claim 12,
**characterized in that** the shaping station (W) comprises three pairs of rollers of which two pairs of rollers are movable, in order to be able to construct the corrugation.

## Revendications

1. Noyau d'échangeur de chaleur, par exemple pour refroidisseur de liquide de refroidissement ou refroidisseur d'air de suralimentation,
constitué de tubes plats (1) avec deux côtés étroits, deux côtés larges (10, 20) et des canaux intérieurs (30) ainsi que des espaces intermédiaires (3) restant essentiellement inutilisés entre les côtés larges (20) de tubes plats (1) voisins,
au moins certains des tubes plats successifs (1) pouvant être traversés parallèlement par un fluide, l'autre fluide s'écoulant sensiblement transversalement par rapport à cette direction dans les espaces intermédiaires (3),
les deux côtés larges (20) des tubes plats (1) présentant des déformations en forme d'ondulations (15), les côtés larges (20) étant disposés sensiblement parallèlement les uns aux autres,
**caractérisé en ce que**
les tubes plats (1) sont fabriqués à partir d'un ruban de tôle (a) sans fin et déformé, les canaux intérieurs (30) étant formés d'un autre ruban de tôle (c) ondulé ou d'un tronçon ondulé du ou des rubans de tôle (a),
**en ce que** les sommets et les vallées des ondulations sont reliés métalliquement à l'intérieur des tubes plats (1) sur leurs côtés larges (20),
**en ce que** les ondulations (15) des côtés larges (20) des tubes plats (1) s'étendent dans ou sensiblement dans le sens de la longueur (LR) des tubes plats (1) ou dans ou sensiblement dans la direction transversale des tubes plats (1).

2. Noyau d'échangeur de chaleur selon la revendication 1, **caractérisé en ce que** les deux côtés étroits (10) des tubes plats (1) sont renforcés en présentant une épaisseur qui vaut au moins le double de celle du ruban de tôle et une paroi dont l'épaisseur est le double de celle d'un côté large (20).

3. Noyau d'échangeur de chaleur selon l'une des revendications précédentes, **caractérisé en ce que** les côtés larges (20) ne présentent pas de creux locaux ou de saillies locales.

4. Noyau d'échangeur de chaleur selon l'une des revendications précédentes, **caractérisé en ce que** les côtés larges (20) présentent une partie initiale et/ou finale (20a) qui ne présente pas d'ondulations transversales (15), suite à quoi la direction d'écoulement du fluide (air de refroidissement) qui s'écoule dans les espaces intermédiaires (3) essentiellement non obstrués est sensiblement perpendiculaire aux côtés étroits (10) des tubes plats (1).

5. Noyau d'échangeur de chaleur selon l'une des revendications précédentes, **caractérisé en ce que** l'épaisseur de la paroi des tubes plats et l'épaisseur du ou des rubans de tôle (c) est comprise dans la plage de 0,03 mm à 0,15 mm.

6. Noyau d'échangeur de chaleur selon l'une des revendications précédentes, **caractérisé en ce que** le tube plat (1) peut être fabriqué à partir de trois rubans de tôle (a, b, c) sans fin et déformés, deux rubans de tôle (a, b) formant la paroi du tube plat et le troisième ruban de tôle (c) constituant une partie intérieure ondulée du tube plat qui forme les canaux (30) dans le tube plat.

7. Noyau d'échangeur de chaleur selon la revendication 6, **caractérisé en ce que** les deux rubans de tôle (a, b) qui forment la paroi du tube plat sont configurés avec un grand arc de cercle (G) sur un des bords longitudinaux et un petit arc de cercle (g) sur l'autre bord longitudinal, le grand arc de cercle (G) d'un ruban de tôle logeant le petit arc de cercle (g) de l'autre ruban de tôle pour former les côtés étroits (10) du tube plat.

8. Noyau d'échangeur de chaleur selon les revendications 6 et 7, **caractérisé en ce que** les bords longitudinaux de la partie intérieure (c) sont déformés et reposent par l'intérieur sur les côtés étroits (10) pour encore renforcer ces derniers.

9. Noyau d'échangeur de chaleur selon l'une des revendications précédentes, **caractérisé en ce que** dans l'application dans un refroidisseur de liquide de refroidissement, la petite dimension (d) du tube plat est comprise entre 0,75 et 1,4 mm, la géométrie ondulée étant **caractérisée en ce que** le rapport entre la longueur d'onde et l'amplitude (λ/a) est compris dans la plage de 1,5 à 7,5 et de préférence de 2,0 à 5,0.

10. Noyau d'échangeur de chaleur selon l'une des revendications précédentes, **caractérisé en ce que** la dimension des espaces intermédiaires (3) représente sensiblement jusqu'au triple de la petite dimension (d) des tubes plats ou légèrement plus.

11. Procédé de fabrication de tubes plats (1) qui servent à former un noyau d'échangeur de chaleur et qui sont fabriqués sur un laminoir équipé de paires de cylindres à partir de rubans d'un matériau (Bb) en bande sans fin qui présentent au moins une partie de paroi (a) et une partie intérieure (c) configurée avec des ondulations,
le ruban s'étendant entre les cylindres et étant déformé dans le sens de la longueur (LR), la partie intérieure (c) configurée avec des ondulations étant amenée entre les parties façonnées de paroi (a, b), suite à quoi le tube plat est fermé et est enfin découpé en tronçons séparés de tubes plats,
**caractérisé en ce que**
après la fermeture et avant la découpe, des ondulations (15) des côtés larges (20) des tubes plats (1) sont formées dans ou sensiblement dans le sens de la longueur (LR) des tubes plats (1) ou **en ce qu'**au cours de la déformation des rubans (a, b, c), des ondulations transversales sont formées dans ou sensiblement dans la direction transversale du tube plat, le rassemblement en un tube plat ondulé (1) ainsi que la fermeture et la découpe étant réalisés ensuite.

12. Laminoir de fabrication de tubes plats (1) à partir d'un matériau plat en ruban sans fin, le laminoir présentant au moins une section (U) de déformation de ruban, une section (V) de rassemblement du ruban en un tube (1) et un poste de découpe (A) des tubes (1), **caractérisé en ce que**
le laminoir est configuré pour exécuter le procédé selon la revendication de procédé qui précède,
**en ce qu'**entre la section de rassemblement (V) et le poste de séparation (A) est disposé un poste de déformation (W) qui permet de réaliser des ondulations longitudinales (15) dans les côtés larges (20) des tubes plats (1) ou **en ce que** dans la section (U) sont disposés des cylindres (W1) qui forment des ondulations transversales (15) dans le ruban sans fin.

13. Laminoir selon la revendication 12, **caractérisé en ce que** le poste de déformation (W) contient au moins une paire de cylindres qui travaille selon le principe des arbres déplacés en nutation.

14. Laminoir selon les revendications 12 ou 13,
**caractérisé en ce que** la paire de cylindres à arbres déplacés en nutation coopère avec une autre paire de cylindres.

15. Laminoir selon la revendication 12, **caractérisé en ce que** le poste de déformation (W) comprend trois paires de cylindres parmi lesquelles deux paires de cylindres sont mobiles, de manière à pouvoir former les ondulations.
